# EUROPEAN PATENT APPLICATION

(11) **EP 3 018 585 A1**
(43) Date of publication of application: **11.05.2016**
(21) Application number: 13888816.9
(22) Date of filing: 02.07.2013
(51) Int. Cl.: G06F 11/00, G06F 9/50

(54) **MACHINE PROVISION METHOD, MACHINE PROVISION SYSTEM, AND MACHINE PROVISION PROGRAM**

(71) Applicant: Fujitsu Limited, Kawasaki-shi, Kanagawa 211-8588 (JP)
(72) Inventor: DOI, Tsunehisa, Kawasaki-shi Kanagawa 211-8588 (JP)
(74) Representative: Hoffmann Eitle
(86) International application number: PCT/JP2013/068128
(87) International publication number: WO 2015/001614

(57) **Abstract**

A method for providing one or more machines (2) to a user in a unit of the machine includes: deciding, when a first machine (2) allocated to a user is to be released from allocation to the user, whether or not firmware that controls operation of the first machine (2) has been changed after the allocation; storing, when the firmware has been changed, information relating to a changed firmware into a storage unit (12) in an associated relationship with the user; deciding, when the first or a second machine (2) is allocated to the user, whether or not the information corresponding to the user is stored in the storage unit (12); setting, in a case where the information is stored, the changed firmware (123) to the first or second machine (2), and setting, in a case where the information is not stored, default firmware (122) to the first or second machine (2).

## Description

### TECHNICAL FIELD

The present embodiments relate to a machine providing method, a machine providing system and a machine providing program.

### BACKGROUND ART

In the Infrastructure as a Service (IaaS), a resource such as a server is provided in response to a demand of a user (customer).

For example, a virtual IaaS is implemented by shared resources of a plurality of physical servers (machines), and the shared resources of the physical server are provided to a plurality of users by a virtual technology such as a Virtual Machine (VM) in order to implement enhancement of the efficiency.

Some users desire to monopolize physical servers, and provision of a physical server to a user, for example, by the physical IaaS is performed. In the physical IaaS, one physical server is monopolized by one user, and therefore, the utilization efficiency of the physical server degrades in comparison with that of the IaaS by the virtual technology. Therefore, when a physical server is not utilized, a management server that performs management of the physical IaaS withdraws (disconnects) the physical server (shared resource) from the user and allocates the physical server to a different user. Consequently, improvement of the utilization efficiency of the physical server is achieved.

Further, some physical IaaS permits alteration (change) of firmware of a physical server to be utilized for each user, and there is a case in which the user can alter firmware of the physical server so as to operate conveniently to the user.

It is to be noted that, as a related technology, a technology is known that a central processor acquires firmware that is ready f or a single or a plurality of operation modes from among a plurality of operation modes and is used for execution of an instruction from the outside (for example, refer to Patent Document 1).

Further, as a different related technology, also a technology is known in which falsification check of a virtual machine is performed at a predetermined timing by a safe execution unit with regard to which falsification cannot be performed and an application execution apparatus can be stopped forcibly when falsification is detected (for example, refer to Patent Document 2).

Further, as a different related technology, also a technology is known that a file monitoring apparatus includes a file access unit, a falsification decision unit that decides whether or not falsification for a file has been performed and a file restoration unit that restores a file from falsification (for example, refer to Patent Document 3).

### PRIOR ART DOCUMENT

### PATENT DOCUMENT

Patent Document 1: International Publication Pamphlet No. WO 2003/046715
Patent Document 2: Japanese Laid-Open Patent Publication No. 2007-226277
Patent Document 3: Japanese Laid-Open Patent Publication No. 2004-013607

### SUMMARY OF THE INVENTION

### SUBJECT TO BE SOLVED BY THE INVENTION

A management server does not recognize that a user has falsified firmware.

Accordingly, in the physical IaaS, even if a physical server that is not utilized by a user is a physical server in which firmware has been falsified by the user, there is a case in which the management server recovers the physical server and returns the recovered server to a resource pool such that the physical server is provided to a different user. In this case, when the provided physical server is utilized, there is the possibility that the different user may be influenced by unexpected operation by the firmware falsified uniquely by the former user.

Further, when re-utilization of a physical server is requested by a user, the management server provides a physical server that satisfies the request of the user from within the resource pool to the user. Accordingly, there is the high possibility that a physical server different from that to which firmware falsified by the user was set in the past may be allocated to the user.

In this manner, in the physical IaaS described above, there is a subject that, when allocation of a machine to a user and release of the allocation are performed, a machine to which firmware that is satisfactory to the user is set is sometime not provided.

It is to be noted that the subject described above is not taken into consideration in the related technologies described above.

In an aspect of the present invention, it is an object of the present invention to provide, when allocation of a machine to a user and release of the allocation are performed in a machine providing system for providing a machine to a user in a unit of the machine, a machine to which firmware that is satisfactory to the user is set.

It is to be noted that, in addition to the object described above, also it can be positioned as one of other objects of the present invention to achieve such working-effects as are derived from the constitutions of several modes for carrying out the present invention hereinafter described but are not achieved by the conventional technologies.

### MEANS FOR SOLVING SUBJECT

According to an aspect of the embodiments, a machine providing method for providing one or more machines to a user in a unit of the machine, includes: deciding, when a first machine allocated to a user is to be released from allocation to the user, whether or not firmware that controls operation of the first machine has been changed after the allocation, storing, when the firmware has been changed, information relating to a changed firmware into a storage unit in anassociated relationship with the user, deciding, when the first machine or a second machine is allocated to the user, whether or not the information corresponding to the user is stored in the storage unit, setting, in a case where the information corresponding to the user is stored in the storage unit, the changed firmware to the first or second machine to be allocated to the user, and setting, in a case where the information corresponding to the user is not stored in the storage unit, default firmware to the first or second machine to be allocated to the user.

### EFFECT OF THE INVENTION

With the disclosed system, when allocation of a machine to a user and release of the allocation are performed in a machine providing system for providing a machine to a user in a unit of the machine, a machine to which firmware that is satisfactory to the user is set can be provided.

### BRIEF DESCRIPTION OF DRAWINGS

FIG. 1 is a view depicting an example of a configuration of an information processing system according to a first embodiment.
FIG. 2 is a view depicting an example of a hardware configuration of a management server depicted in FIG. 1.
FIG. 3 is a view depicting an example of a functional configuration of a physical server and the management server depicted in FIG. 1.
FIG. 4 is a view depicting an example of a logical server management table retained by the management server depicted in FIG. 3.
FIG. 5 is a view depicting an example of a present condition firmware table retained by the management table depicted in FIG. 3.
FIG. 6 is a flow chart illustrating an example of a lending process of a physical server to a user by the physical server and management server depicted in FIG. 3.
FIG. 7 is a flow chart illustrating an example of a recovery process of a physical server from a user by the physical server and management server depicted in FIG. 3.
FIG. 8 is a flow chart illustrating an example of an update process of original firmware by the management server depicted in FIG. 3.
FIG. 9 is a view depicting a first modification to the functional configuration of the physical server and the management server depicted in FIG. 1.
FIG. 10 is a flow chart illustrating an example of a lending process of a physical server to a user by the physical server and management server depicted in FIG. 9.
FIG. 11 is a flow chart illustrating an example of a recovery process of a physical server from a user by the physical server and management server depicted in FIG. 9.
FIG. 12 is a view depicting a second modification to the functional configuration of the physical server and the management server depicted in FIG. 1.
FIG. 13 is a flow chart illustrating an example of a recovery process of a physical server from a user by the physical server and management server depicted in FIG. 12.
FIG. 14 is a view depicting an example of a functional configuration of a physical server and a management server according to a second embodiment.
FIG. 15 is a flow chart illustrating an example of a lending process of a physical server to a user by the physical server and the management server depicted in FIG. 14.
FIG. 16 is a flow chart illustrating an example of an update process of original firmware by the management server depicted in FIG. 14.

### MODE FOR CARRYING OUT THE INVENTION

In the following, embodiments are described with reference to the drawings.

### (1) First Embodiment

### (1-1) Configuration of Information Processing System

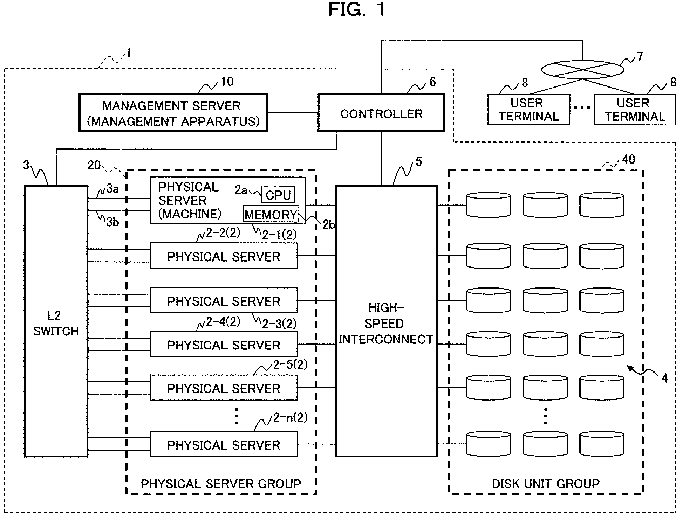

In the following, a configuration of an information processing system 1 as an example of the first embodiment is described with reference to FIG. 1.

FIG. 1 is a view depicting an example of a configuration of the information processing system 1 according to the first embodiment.

As depicted in FIG. 1, the information processing system 1 according to the first embodiment includes a plurality of (for example, n) physical servers 2-1 to 2-n, a Layer 2 (L2) switch 3 and a plurality of disk units 4. Further, the information processing system 1 includes a high-speed interconnect 5, a controller 6 and a management server 10. It is to be noted that, where the physical servers 2-1 to 2-n are not distinguished from each other in the following description, the physical servers 2-1 to 2-n are each referred to simply as physical server 2.

Here, the information processing system (machine providing system) 1 is a system for providing one or more physical servers 2 to a user (customer) in a unit of the physical server 2, and, for example, a physical IaaS is available.

The information processing system 1 provides (allocates) a physical server 2 from within a resource pool to a user in response to a demand of the user. Further, the information processing system 1 permits the user to update firmware for controlling operation of the physical server 2 which is utilized by the user.

The physical server (machine) 2 is a computer (information processing apparatus) including at least a central processor (CPU) 2a and a memory 2b, and a physical server group 20 as a resource pool (shared resources) is formed from the physical servers 2-1 to 2-n.

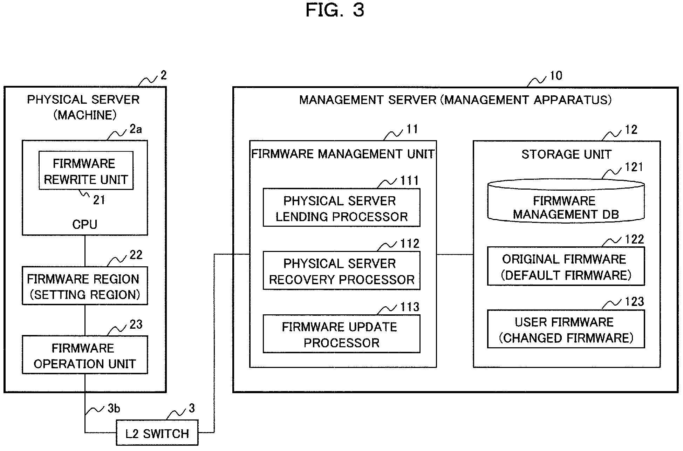

It is to be noted that the CPU 2a is an arithmetic processing unit (processor) that is coupled with the memory 2b and performs various controls and arithmetic operation. The CPU 2a implements various functions of the physical server 2 by executing a program (firmware) stored in the memory 2b, a firmware region 22 (refer to FIG. 3), a disk unit 4 or a read only memory (ROM) not depicted. It is to be noted that not the CPU 2a but an electronic circuit such as a Micro Processing Unit (MPU) may be used as a processor.

The memory 2b is a storage device that stores various kinds of data and programs. The CPU 2a stores and develops data or a program into the memory 2b when the program is to be executed. It is to be noted that, as the memory 2b, a volatile memory such as, for example, a random access memory (RAM) is available.

Details of the physical server 2 are hereinafter described.

The L2 switch 3 couples the physical servers 2 with each other and performs coupling between a physical server 2 and the controller 6. The L2 switch 3 forms, for each of users (tenants), a virtual network of a physical server 2 allocated to the user by a virtual local area network (VLAN) or the like. Consequently, the user can perform management of the allocated physical server 2 in the virtual network.

Each of the physical servers 2 and the L2 switch 3 are coupled with each other through lines of two types including a communication line 3a and a management line 3b.

The communication line 3a is a coupling line used for provision of a physical server 2 to a user terminal 8 (user). The user terminal 8 performs access to the allocated physical server 2 through a network 7, the controller 6, the L2 switch 3 and the communication line 3a.

The management line 3b is a coupling line used for management of the physical server 2 by the management server 10. The management server 10 performs access to the physical server 2 with regard to which management is performed through the controller 6, L2 switch 3 and management line 3b.

The disk unit 4 is a storage device such as a hard disk drive (HDD) or a solid state drive (SSD) and forms a disk unit group 40 as a resource pool (storage pool; shared resources).

The high-speed interconnect 5 is an interconnect for changing over coupling between the physical servers 2 and the storage devices of the disk units 4. The information processing system 1 can implement an arbitrary configuration (combination) of the physical servers 2 and the storage devices that satisfy a request of a user, by the high-speed interconnect 5. It is to be noted that, for simplification of the drawing, part of coupling lines between the storage devices of the disk units 4 and the high-speed interconnect 5 is omitted in FIG. 1.

The controller 6 is coupled with the L2 switch 3, high-speed interconnect 5, network 7 and management server 10.

For example, in response to a request from a user terminal 8 or the management server 10, the controller 6 performs transmission and reception of information such as data or a command through the L2 switch 3, issuance of a changeover instruction of a virtual network to the L2 switch 3 and issuance of a changeover instruction of the communication line 3a and the management line 3b.

Further, the controller 6 performs issuance of a changeover instruction of a physical server 2 and a storage device to the high-speed interconnect 5 and so forth in response to a request from a user terminal 8 or the management server 10.

It is to be noted that, as the controller 6, a device including a function as a Layer 3 (L3) switch or a router or a computer (information processing apparatus) such as a server may be used.

The user terminal 8 is a client such as a computer operated by a user who utilizes a physical IaaS.

The management server (management apparatus) 10 manages the entire information processing system 1. For example, the management server 10 performs management of a physical server 2 to be provided to a user and controls allocation of a physical server 2 to a user and release of the allocation.

Further, the management server 10 manages firmware of a physical server 2 for each user and provides, when allocation of a physical server 2 to a user and release of the allocation are to be performed, a physical server 2 to which firmware that is satisfactory to the user is set.

It is to be noted that, while the management server 10 is connected to the controller 6 in FIG. 1, the coupling of the controller 6 is not limited to this, and the controller 6 may be coupled with the management server 10 through the network 7 or some other network.

Details of the management server 10 are described below.

### (1-2) Hardware Configuration of Management Server 10

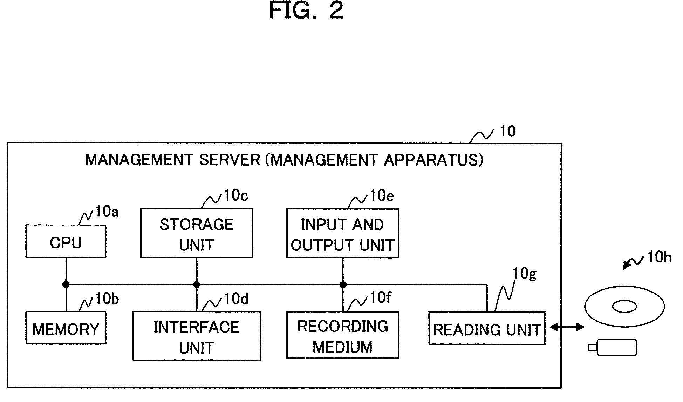

Now, a hardware configuration of the management server 10 is described with reference to FIG. 2. FIG. 2 is a view depicting an example of a hardware configuration of the management server 10 depicted in FIG. 1.

As depicted in FIG. 2, the physical server 2 includes a CPU 10a, a memory 10b, a storage unit 10c, an interface unit 10d, an input and output unit 10e, a recording medium 10f and a reading unit 10g.

The CPU 10a is an arithmetic processing unit (processor) that is coupled with the memory 10b, storage unit 10c, interface unit 10d, input and output unit 10e, recording medium 10f and reading unit 10g and performs various kinds of controls and arithmetic operation. The CPU 10a implements various functions of the management server 10 by executing a program stored in the memory 10b, the storage unit 10c, the recording medium 10f, a recording medium h coupled with or inserted in the reading unit 10g or a ROM not depicted. It is to be noted that not the CPU 10a but an electronic circuit such as an MPU may be used as the processor.

The memory 10b is a storage device for storing various data or programs therein. The CPU 10a stores and develops data or a program into the memory 10b when the program is to be executed. It is to be noted that, as the memory 10b, a volatile memory such as, for example, a RAM is available.

The storage unit 10c is one or more pieces of hardware that store various data or programs therein such as, for example, a magnetic disk apparatus such as an HDD, a semiconductor drive apparatus such as an SSD or a nonvolatile memory such as a flash memory.

The interface unit 10d is a controller that performs control of coupling and communication with the controller 6. As the interface unit 10d, an interface card in compliance with, for example, a LAN, a Fibre Channel (FC) or the like is available.

The input and output unit 10e may include at least one of an inputting apparatus such as, for example, a mouse or a keyboard and an outputting apparatus such as a display unit or a printer. For example, the input and output unit 10e is used for various works by the manager of the management server 10 (information processing system 1) or the like.

The recording medium 10f is a storage device such as a f lash memory or a ROM and records various data or programs therein. The reading unit 10g is an apparatus that reads out data or a program recorded in the computer-readable recording medium 10h such as an optical disk or a universal serial bus (USB) memory.

In at least one of the recording mediums 10f and 10h, a machine providing program for implementing the functions of the management servers 10 (, 10' and 10") and 10A according to the first embodiment (including first and second modifications hereinafter described) and a second embodiment hereinafter described may be stored. In particular, the CPU 10a implements the function of the management server 10 by developing and executing the machine providing program outputted from the recording medium 10f or the recording medium 10h through the reading unit 10g into a storage device such as a memory 10b.

It is to be noted that the pieces of hardware described above are coupled for communication with each other through a bus. For example, the CPU 10a, memory 10b and interface unit 10d are coupled with a system bus. For example, the storage unit 10c, input and output unit 10e, recording medium 10f and reading unit 10g are connected to a system bus through an 10 interface or the like. It is to be noted that the storage unit 10c is connected to an 10 interface such as a disk interface (DI) through a storage bus (cable). As the storage bus, a bus in compliance with Small Computer System Interface (SCSI), Serial Attached SCSI (SAS), Fibre Channel, Serial Advanced Technology Attachment (SATA) or the like is available.

It is to be noted that the hardware configuration described above of the management server 10 is exemplary. Accordingly, addition and deletion, division and so forth of hardware in the management server 10 may be performed suitably.

It is to be noted that also the physical server 2 may include hardware elements similar to those of the management server 10 or one or more elements of the hardware of the management server 10.

### (1-3) Functional Configuration of Physical Server and Management Server

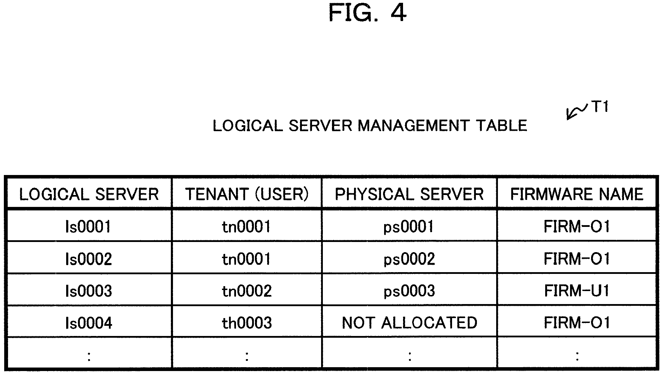

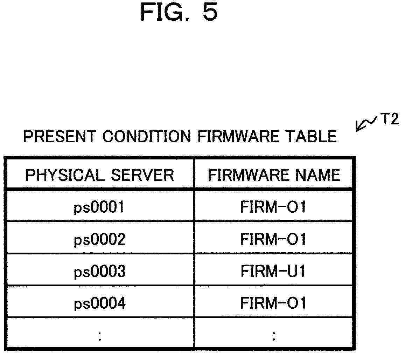

Now, a functional configuration of the physical server 2 and the management server 10 is described with reference to FIGS. 3 to 5. FIG. 3 is a view depicting an example of a functional configuration of the physical server 2 and the management server 10 depicted in FIG. 1. FIGS. 4 and 5 are views depicting an example of a logical server management table T1 and a present condition firmware table T2 retained by the management server 10 depicted in FIG. 3, respectively.

First, the functional configuration of the physical server 2 is described.

As depicted in FIG. 3, the physical server 2 includes a firmware rewrite unit 21, a firmware region 22 and a firmware operation unit 23.

The firmware rewrite unit 21 is a circuit incorporated in the CPU 2a and performs change such as rewrite or falsification of firmware set to the firmware region 22 in response to a request from a user terminal 8 (user).

The firmware region (setting region) 22 is a storage region to which firmware is set by the management server 10 and is a region that is referred to upon execution of the firmware by the CPU 2a or the like.

Here, the firmware is software incorporated in the hardware of the physical server 2 and closely connected to the hardware. For example, the firmware is software for executing (defining) at least one of initialization just after startup, performance of a test and so forth and operation of the hardware itself in order to demonstrate predetermined operation by the hardware.

As the firmware, software for controlling operation of the CPU, IO and so forth such as Basic Input/Output System (BIOS), Extensible Firmware Interface (EFI), CPU firmware, an extension BIOS or firmware for a management organization is available.

The firmware is stored in a rewritable medium physically coupled with the hardware (CPU 2a, IO of the physical server 2 or the like) that is a controlling target. Therefore, as the firmware region 22, a nonvolatile memory such as a flash memory is available. Further, for the firmware region 22, at least part of a rewritable programmable logic device such as a Field-Programmable Gate Array (FPGA) may be used.

In the example depicted in FIG. 3, the CPU 2a executes the firmware set to the firmware region 22 on the firmware region 22 or on the memory 2b not depicted and performs operation defined by the firmware.

It is to be noted that, where the firmware is the extension BIOS or the like, the firmware region 22 is coupled also with the IO (not depicted) such as an extension card.

The firmware operation unit 23 is a circuit capable of reading from and writing into the firmware region 22 under the control of the management server 10, and can access the firmware region 22 separately from the CPU 2a (firmware rewrite unit 21).

Further, the physical server 2 includes an interface (access channel) that accepts an operation instruction for rewriting, readout and so forth of the firmware from the management server 10 to the firmware operation unit 23 through the management line 3b. It is to be noted that the physical server 2 may accept an operation instruction of the firmware by the processor that accepts the IO at the management server 10 side.

Now, the functional configuration of the management server 10 is described.

In the following, description is given taking notice of a management technique of firmware by the management server 10. The other processes by the management server 10 (for example, allocation of a physical server 2 to a user, addition and disconnection processes of a disk unit 4 upon release of the allocation and so forth) can be performed by various known techniques, and therefore, detailed description of them is omitted.

As depicted in FIG. 3, the management server 10 includes a firmware management unit 11 and a storage unit 12.

Further, the management server 10 includes an access channel (not depicted) for performing a firmware operation for each of the physical servers 2. The access channel is a channel used for access upon readout operation, rewriting operation and so forth of the firmware by a manager such as an infrastructure manager of the information processing system 1, and is implemented by part of the interface unit 10d. The management server 10 accesses the physical server 2 through the access channel, controller 6, L2 switch 3 and management line 3b. It is to be noted that, for simplification of the figure, illustration of the controller 6 is omitted in FIG. 3.

The storage unit 12 retains a firmware management database (DB) 121, original firmware 122 and user firmware 123. It is to be noted that the storage unit 12 is implemented by the memory 10b or the storage unit 10c depicted in FIG. 2.

The firmware management database 121 stores the logical server management table T1 and the present condition firmware table T2 depicted in FIGS. 4 and 5 therein.

As exemplified in FIG. 4, the logical server management table T1 is a table for managing the physical servers 2 mapped to the logical servers and the firmware corresponding to the logical servers. In particular, the logical server management table T1 includes, as items, logical server ID, tenant (user) ID, physical server ID and firmware name.

As an example, the logical server management table T1 includes information in which a tenant ID "tn0001", a physical server ID "ps0001" and a firmware name "firm-O1" are associated with a logical server ID "Ls0001".

It is to be noted that each of the logical server ID, tenant ID and physical server ID may be unique information capable of specifying them. In the case of the physical server ID, it may be a Media Access Control (MAC) address, an Internet Protocol (IP) address or the like.

Here, the logical server described is a server in which setting of the physical server 2 utilized by the user is abstracted and is a unit when the lent out physical server 2 is recognized by the user. It is to be noted that a corresponding relationship between the logical server management table T1 and the present condition firmware table T2 may change every time lending and recovery of the physical server 2 are performed.

It is to be noted that the setting itself of the physical server 2 abstracted by the logical server is stored in a disk unit irrespective of whether or not the physical server 2 is allocated (lent) to the logical server.

The firmware name includes information indicating whether the firmware is original firmware (default firmware) provided by the management server 10 or is not original firmware (user firmware customized (changed) by the user). Further, the firmware name further includes information indicating a version number where the firmware is original firmware or indicating an identifier (for example, a number) where the firmware is not original firmware. Information indicating whether or not the firmware is original firmware and a version number or an identifier from within the firmware name are hereinafter referred to as identification information.

For example, the last two digits of firmware names "firm-O1" and "firm-Ul" are identification information. From within the identification information, "O" and "U" in the first digit indicate original and user, respectively. Further, "1" in the second digit indicates a first version in a case of the original firmware but indicates a value for distinguishing the firmware from some other user firmware in a case of the user firmware.

It is to be noted that the original firmware (default firmware) 122 and user firmware (changed firmware) specified by the firmware name are stored in the storage unit 12. It is to be noted that, while the storage unit 12 stores one piece of the user firmware 123 therein in FIG. 3, actually the storage unit 12 stores an equal number of pieces of firmware to that of pieces of firmware changed by each user.

For example, logical server IDs "ls0001", "1s0002" and "1s0004" are associated with the original firmware 122 anda logical server ID "1s0003" is associated with the user firmware 123.

As illustrated in FIG. 5, the present condition firmware table T2 is a table for managing firmware names set to the physical servers 2 at present. In particular, the present condition firmware table T2 includes physical server ID and firmware name as items.

As an example, the present condition firmware table T2 includes information wherein a firmware name "firm-O1" is associated with a logical server ID "ps0001".

The firmware management unit 11 manages a state of firmware set to each physical server 2 on the basis of the tables stored in the firmware management DB 121. It is to be noted that the firmware management unit 11 is implemented by the CPU 10a depicted in FIG. 2 developing a machine providing program into the memory 10b and executing the machine providing program.

The firmware management unit 11 exemplarily includes a physical server lendingprocessor 111, a physical server recovery processor 112 and a firmware update processor 113.

The physical server lending processor 111 sets firmware that is satisfactory to the user to the physical server 2 of an allocation target when the physical server 2 is to be lent to the user, namely, the logical server of the user is to be deployed to the physical server 2.

In particular, for example, taking a power supply on operation of the logical server by the user as a trigger, the physical server lending processor 111 confirms firmware (identification information of the firmware name) corresponding to the logical server whose power supply is switched on, by referring to the logical server management table T1.

Then, the physical server lending processor 111 decides whether or not the confirmed firmware is the original firmware 122.

If the confirmed firmware is the original firmware 122, then the physical server lending processor 111 issues an instruction to deploy the original firmware 122 to a physical server 2 of an allocation target from among the non-allocated physical servers 2 in the resource pool. It is to be noted that the physical server 2 of the allocation target is determined by the management server 10 or the like in accordance with a performance or specifications requested by the user.

On the other hand, if the confirmed firmware is not the original firmware 122, then the physical server lending processor 111 issues an instruction to deploy the user firmware 123 corresponding to the firmware name to the physical server 2 of the allocation target.

It is to be noted that, in the deployment instruction of the firmware to the physical server 2, the physical server lending processor 111 reads out the firmware corresponding to the physical server (user) from the storage unit 12 and transmits the readout firmware to the physical server 2. When the deployment instruction is received, the physical server 2 sets the received firmware to the firmware 22 by the firmware operation unit 23, and, if some other process involved in lending by the management server 10 is performed, then the set firmware is executed.

Further, the physical server lending processor 111 performs issuance of an instruction to the physical server 2 of the allocation target and sets a firmware name including identification information of firmware with regard to which the instruction has been issued to an entry of the physical server 2 in the present condition firmware table T2.

It is to be noted that the physical server lending processor 111 may add an entry of a logical server associated with the original firmware 122 to the logical server management table T1 when provision of the physical IaaS to a tenant is started. Consequently, the physical server lending processor 111 can allocate the original firmware 122 where a physical server 2 is to be allocated to a logical server whose power supply is turned on newly (logical server started up for the first time).

Further, when it is decided whether or not the firmware corresponding to the logical server is original firmware, the physical server lending processor 111 may confirm firmware set at present to the physical server 2 of the allocation target by referring to the present condition firmware table T2. Further, if the firmware set at present to the physical server 2 of the allocation target is same as that corresponding to the logical server, then the physical server lending processor 111 may omit issuance of a deployment instruction. Consequently, the processing load to the management server 10 can be decreased and the communication amount can be reduced, and the time period until the physical server 2 is lent to the user can be reduced.

When a physical server 2 is recovered from the user, namely, when allocation to the logical server is released from the physical server 2 allocated to the logical server (user), the physical server recovery processor 112 stores firmware that is satisfactory to the user from the physical server 2 of a recovery target into the storage unit 12.

In particular, for example, taking a power supply off operation of a logical server by a user as a trigger, the physical server recovery processor 112 confirms the firmware set to the physical server 2 of the recovery target by referring to the present condition firmware table T2.

Further, the physical server recovery processor 112 reads out the confirmed firmware from the storage unit 12.

Further, the physical server recovery processor 112 issues an instruction to read out the firmware set to the firmware region 22 to the physical server 2 (firmware operation unit 23) of the recovery target and receives the firmware.

Then, the physical server recovery processor 112 decides whether or not writing into the firmware of the firmware region 22 is performed by the physical server 2 by comparing the firmware read out from the storage unit 12 and the firmware received from the physical server 2 with each other. It is to be noted that the decision of whether or not writing has been performed is performed, for example, depending upon whether or not results of the comparison between contents of the firmware are different from each other.

If writing has not been performed (results of the comparison are same as each other), the physical server recovery processor 112 decides that change of the firmware by the user has not been performed. Further, the physical server recovery processor 112 sets a physical server ID "not allocated (or "0", "-" or the like indicating no allocation)" to the entry of the physical server 2 in the logical server management table T1.

On the other hand, if writing has been performed (results of the comparison are different from each other), then the physical server recovery processor 112 decides that the firmware of the physical server 2 has been changed by the user, and stores the firmware received from the physical server 2 as the user firmware 123 into the storage unit 12.

Further, the physical server recovery processor 112 stores the user firmware 123 into the storage unit 12 and sets a new firmware name including identification information "Ux" (x is an arbitrary value) to an entry of the logical server of the recovery target in the logical server management table T1.

Further, the physical server recovery processor 112 sets a physical server ID "not allocated" or the like to an entry of the physical server 2.

If the process relating to the firmware by the physical server recovery processor 112 comes to an end, then the management server 10 performs some other process involved in recovery.

The firmware update processor 113 performs a process involved in version up (update) of the original firmware 122 stored in the storage unit 12 in the management server 10. For example, there is a case in which the manager or the like desires to update the original firmware 122 set to the physical server 2 for repair of a fault of the original firmware 122 or the like. In such a case as just described, the firmware update processor 113 performs update of the original firmware 122 in the following manner.

Forexample, if an update version of the original firmware is acquired, then the firmware update processor 113 stores the acquired firmware as the original firmware 122 into the storage unit 12. It is to be noted that, in the following description, in order to distinguish the acquired original firmware from the original firmware 122 set to the storage unit 12, the acquired original firmware is referred to as original firm.

At this time, the firmware update processor 113 may rewrite (overwrite) the existing (before update) original firmware 122 or may save the original firmware 122 as an old version into the storage unit 12 or the like. It is to be noted that the firmware update processor 113 can acquire the original firmware of the update version from some other apparatus through the interface unit 10d or from the recording medium 10h or the like through the reading unit 10g.

Further, the firmware update processor 113 performs management by associating firmware after update with the user associated with the original firmware 122. For example, the firmware update processor 113 changes the firmware name of an entry in which identification information indicates original to a new firmware name including identification information "Oy" (y is an arbitrary value) of the original firmware 122 after update.

It is to be noted that re-startup of the physical server 2 is frequently involved in update of firmware in the physical server 2. Therefore, it is preferable to perform application of firmware of an update version to the physical server 2 that uses the original firmware 122 not at a timing at which the update version is stored into the storage unit 12 but at a timing at which a non-allocated physical server 2 is allocated to a logical server.

For example, when the physical server 2 is allocated to the logical server (user) associated with the original firmware 122, the physical server lending processor 111 performs issuance of a deployment instruction of firmware read out from the storage unit 12 to the physical server 2. At this time, since the firmware read out by the physical server lending processor 111 is the firmware of the update version, the manager or the like of the information processing system 1 can safely apply the update version to the physical server 2 by the management server 10 without stopping operation of the logical server.

Incidentally, there is a case in which the version of the original firmware 122 provided by the management server 10 is older than the latest version provided by the fabrication source of the physical server 2 or the like. This is because time is required for confirmation of the safety by the manager or the like such as verification of whether or not some trouble occurs upon provision of the physical IaaS by applying the firmware of the latest version to the physical server 2.

However, there is the possibility that some users may want to utilize some function existing in the firmware of the latest version provided by the fabrication source or the like. There is a case in which such users as just described use the firmware of the latest version prior to provision from the management server 10 by falsifying the firmware uniquely on the allocated physical server 2 before the firmware of the latest version is provided as the original firmware 122.

When the original firmware 122 is to be updated to firmware of the latest version, if there is a user who uses the latest version precedently, then the firmware update processor 113 deletes the user firmware 123 corresponding to the user. Then, the firmware update processor 113 performs management by associating the original firmware 122 of the update version with the firmware corresponding to the user.

In this manner, if the firmware of the update version stored in the management server 10 is updated to that of the latest version used precedently by the user, then the firmware update processor 113 considers that the firmware of the user has not been written (changed). Then, the firmware update processor 113 exchanges the user firmware 123 corresponding to the user into the original firmware 122.

Inparticular, when the contents of the original firmware 122 are to be updated to contents of the firmware, the firmware update processor 113 decides whether or not the user firmware 123 stored in the storage unit 12 coincides with the original firmware 122 after update. The decision of whether or not the user firmware 123 coincides with the original firmware 122 is performed, for example, on the basis of whether or not, when the contents of pieces of the firmware are compared with each other, a result that the contents coincide with each other is obtained.

Then, if it is decided that the pieces of the firmware coincide with each other, then the firmware update processor 113 deletes the user firmware 123 from the storage unit 12 and performs management by associating the original firmware 122 after update with the user corresponding to the deleted firmware. For example, the firmware update processor 113 changes the firmware name of an entry of the corresponding logical server to a new firmware name including identifier information "Oy" of the original firmware 122 after update in the logical server management table T1.

As described above, with the firmware update processor 113, since the user firmware 123 used by the user can be deleted from the storage unit 12 without changing the firmware used by the user, a use ratio of the storage region of the storage unit 12 can be decreased. Particularly, in a case in which a great number of users who use the latest version precedently exist or in another case in which users utilize a great number of physical servers 2, consumption of the storage area of the storage unit 12 can be suppressed and the cost increase of the storage region can be suppressed. Therefore, the firmware update processor 113 is more effective.

### (1-4) Example of Operation

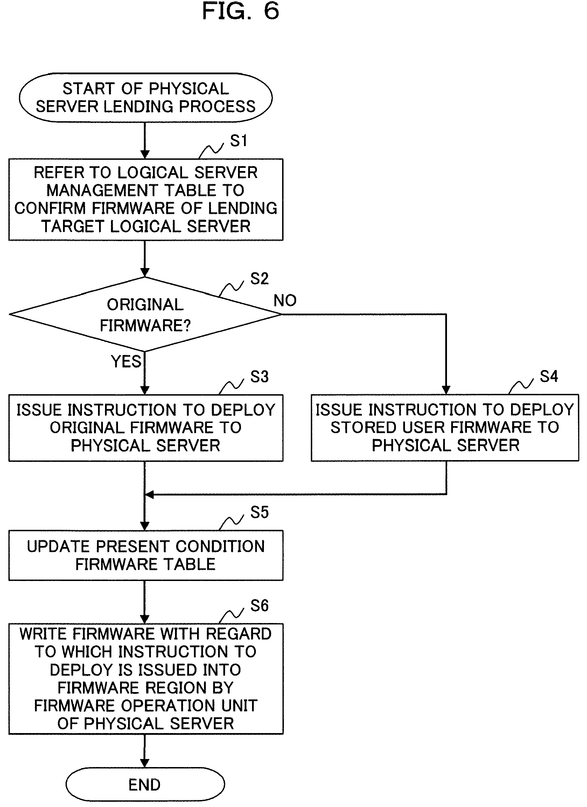

Now, an example of operation of the information processing system 1 as an example of the first embodiment configured in such a manner as described above is described with reference to FIGS. 6 to 8. The operation example given below is described taking notice of a process relating to management of firmware, and description of the other processes in the information processing system 1 is omitted.

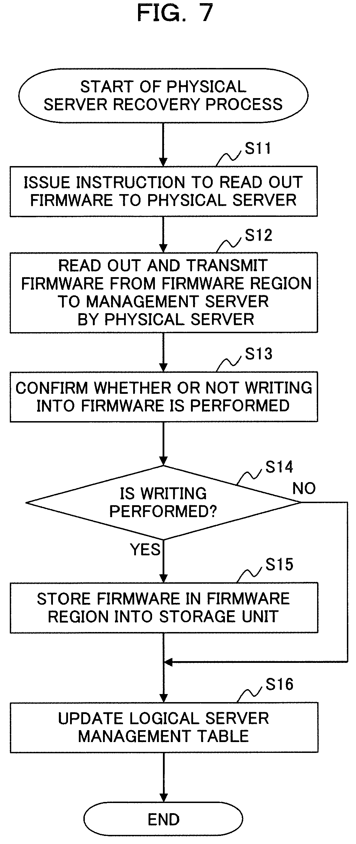

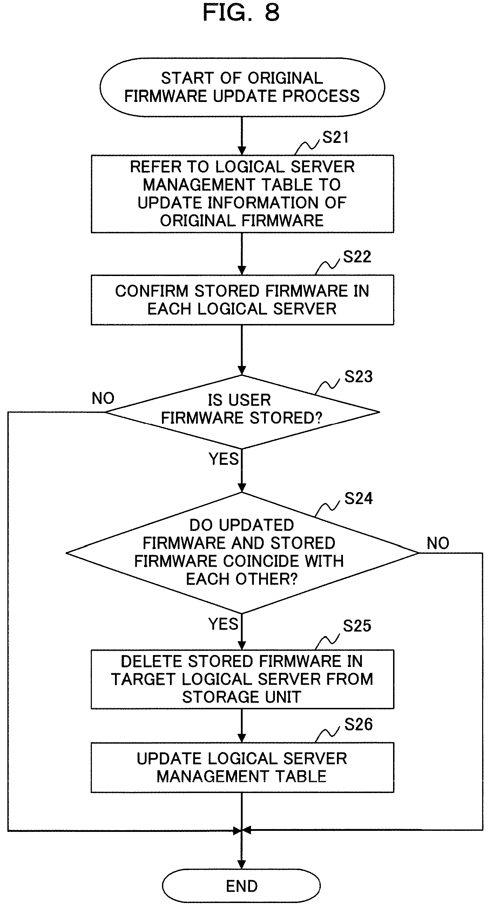

FIG. 6 is a flowchart illustrating an example of a lending process of a physical server 2 to a user by the physical server 2 and the management server 10 depicted in FIG. 3. FIG. 7 is a flow chart illustrating an example of a recovery process of the physical server 2 from the user by the physical server 2 and the management server 10 depicted in FIG. 3. FIG. 8 is a flow chart illustrating an example of an update process of the original firmware 122 by the management server 10 depicted in FIG. 3.

### (1-4-1) Physical Server Lending Process

First, a lending process of a physical server 2 to a user by the information processing system 1 is described with reference to FIG. 6.

If the power supply to the logical server is switched on by the user, then the logical server management table T1 is referred to and the firmware of the logical server of a lending target is confirmed by the management server 10 (physical server lending processor 111) (step S1).

Then, it is decided by the physical server lending processor 111 whether or not the firmware of the logical server of the lending target is the original firmware 122 (step S2). If the firmware of the logical server of the lending target is the original firmware 122 (Yes route at step S2), then the original firmware 122 is read out from the storage unit 12 by the physical server lending processor 111. Further, an instruction for deployment of the read out firmware is issued to the physical server 2 of an allocation target by the physical server lending processor 111 (step S3), and the processing advances to step S5.

On the other hand, if the firmware of the logical server of the lending target is not the original firmware 122 (No route at step S2), then the user firmware 123 corresponding to the logical server of the lending target is read out from the storage unit 12 by the physical server lending processor 111. Further, an instruction for deployment of the read out firmware is issued to the physical server 2 of an allocation target by the physical server lendingprocessor 111 (stepS4), and the processing advances to step S5.

At step S5, a firmware name in an entry of the physical server 2 of the allocation target in the present condition firmware table T2 is updated to a firmware name with regard to which the instruction of deployment has been issued at step S3 or S4 by the physical server lending processor 111.

In the physical server 2 that has received the deployment instruction from the management server 10 through the management line 3b, the firmware with regard to which the instruction for deployment has been issued is written into the firmware region 22 of the own physical server 2 by the firmware operation unit 23 (step S6), and the processing ends.

It is to be noted that the management server 10 may execute the process at step S5 in parallel to the process at step S3 or S4.

### (1-4-2) Physical Server Recovery Process

Now, a recovery process of a physical server 2 from a user by the information processing system 1 is described with reference to FIG. 7.

If the power supply to the logical server is turned off by the user, then a readout instruction for the firmware is issued to the physical server 2 corresponding to the logical server of a recovery target by the management server 10 (physical server recovery processor 112) (step S11).

In the physical server 2 that has received the readout instruction, the firmware is read out from the firmware region 22 of the own physical server 2 and is transmitted to the management server 10 by the firmware operation unit 23 (step S12).

Then, the present condition firmware table T2 is referred to and the firmware to be set to the physical server 2 of the recovery target is confirmed and then the firmware is read out from the storage unit 12 by the physical server recovery processor 112. Then, the read out firmware and the firmware received (acquired) from the physical server 2 are compared with each other by the physical server recovery processor 112 and it is confirmed by the physical server recovery processor 112 whether or not writing into the firmware has been performed after lent in the physical server 2 (step S13).

If it is decided as a result of the confirmation by the physical server recovery processor 112 (step S14) that results of the comparison coincide with each other and writing has been not performed (No route at step S14), then the processing advances to step S16.

On the other hand, if it is decided that the results of the comparison are different from each other and writing has been performed (Yes route at step S14), then the firmware from the physical server 2 is stored as the user firmware 123 into the storage unit 12 by the physical server recovery processor 112 (step S15). Then, the processing advances to step S16.

At step S16, the logical server ID in the entry of the logical server of the recovery target in the logical server management table T1 is updated to "not allocated" by the physical server recovery processor 112, and then the processing ends. It is to be noted that, when the process at step S15 is executed, the firmware name in the entry is updated to a new firmware name including identification information "Ux" at step S16.

It is to be noted that the management server 10 may execute the process at step S16 in parallel to the process at step S15.

### (1-4-3) Original Firmware Update Process

Now, an update process of the original firmware 122 by the management server 10 is described with reference to FIG. 8.

If the management server 10 acquires the original firm of an update version, then the logical server management table T1 is referred to and the firmware name is updated to the identification information "Oy" of all entries indicating the original by the firmware update processor 113 (step S21). Further, the original firm of the update version is stored as the original firmware 122 into the storage unit 12 by the firmware update processor 113.

Further, it is confirmed by the firmware update processor 113 whether or not firmware is stored in the storage unit 12 in regard to the logical servers (step S22).

As a result of the confirmation (step S23), if the user firmware 123 of the logical server is not stored in the storage unit 12 (No route at step S23), then the processing ends.

On the other hand, if the user firmware 123 of the logical server is stored in the storage unit 12 (Yes route at step S23), then it is decided by the firmware update processor 113 whether or not the firmware of the update version and the stored firmware coincide with each other (step S24). If the firmware of the update version and the stored firmware do not coincide with each other (No route at step S24), then the processing ends.

Meanwhile, if the firmware of the update version and the stored firmware coincide with each other (Yes route at step S24), then the stored firmware (user firmware 123) of the target logical server is deleted from the storage unit 12 by the firmware update processor 113 (step S25).

Further, the identification information of the firmware name in an entry of the target logical server in the logical server management table T1 is updated to "Oy" by the firmware update processor 113 (step S26), and the processing ends.

It is to be noted that the management server 10 may execute the process at step S26 in parallel to the process at step S25.

### (1-5) Conclusion

For example, in the physical IaaS, when a physical server 2 is recovered from a user, the disk unit 4 that stores software such as the Operating System (OS), data and so forth therein is disconnected from the physical server 2 and is storedas information for the user. Accordingly, in the physical IaaS, when the physical server 2 is recovered from the user and a different physical server 2 is to be lent to the user, in order to allow the user to utilize the information for the user again, the management server 10 may allocate the disk unit 4 for the user to the user.

However, as described above, the firmware is software incorporated in the hardware of the physical server 2 and closely related to the hardware. Accordingly, the management server 10 cannot store the firmware in a disassociated relationship from the physical server 2 when the physical server 2 is recovered from the user. Therefore, in the conventional physical IaaS, when the physical server is recovered from the user and a different physical server is to be lent to the user, it is difficult for the management server to guarantee re-utilization of the user firmware again for the user.

In contrast, when the physical server 2 (first machine) allocated to the user is to be released from the allocation to the user, the physical server recovery processor 112 according to the first embodiment confirms a state of the firmware of the physical server 2 and decides whether or not the state of the firmware has been changed during lent (after allocation).

Then, if the firmware has been changed, then the physical server recovery processor 112 stores information relating to the changed firmware (for example, user firmware 123) into the storage unit 12 in an associated relationship with the user.

Further, when a physical server 2 (first machine) lent previously or a different physical server 2 (second machine) is to be allocated to the user, the physical server lending processor 111 decides whether or not the user firmware 123 corresponding to the user is stored in the storage unit 12.

Then, if the user firmware 123 corresponding to the user is stored, then the physical server lending processor 111 sets the user firmware 123 to the physical server 2 of an allocation target. However, if the user firmware 123 is not stored, then the physical server lending processor 111 sets the original firmware 122.

Accordingly, with the information processing system 1 according to the first embodiment, even if, after recovery of a physical server 2, a physical server 2 different from the physical server 2 lent previously is lent, the user can use the suitable user firmware 123 corresponding to the user.

Further, the information processing system 1 can avoid such a situation that a physical server 2 to which firmware changed previously by the user is set is lent to a different user. Consequently, the different user can be suppressed from being influenced by operation arising from the changed firmware. Further, other users (third parties) can be protected against falsification of firmware by a malicious user (damage to other users can be suppressed).

In this manner, with the information processing system 1 (management server 10) according to the first embodiment, when allocation of a physical server 2 to a user and release of the allocation are performed while change of the firmware for the user is permitted, the physical server 2 to which firmware that is satisfactory to the user is set can be provided.

In particular, with the firmware management unit 11, firmware suitable for implementing a system demanded by the user can be provided to the user without depending upon the physical server 2 to be allocated even if allocation of the physical server 2 and release of the physical server 2 are performed.

Incidentally, in the virtual Iaas described above, in order to increase the general utilization efficiency of resources, a degree of freedom of the configuration is secured by the management server performing allocation and recovery of a resource in response to a request of the user from among shared resources and allocating the recovered resource to a different user.

Further, in the virtual Iaas, time billing of the server usage fee is performed, and it is expected that a server that is not used is stopped by the user itself. For example, while approximately 40 percent of all of the VMs are registered in the virtual Iaas, the VMs are often in an inoperative state.

However, in the virtual Iaas, since resources of physical servers and so forth are shared by VMs, interference among users (overhead, bottleneck or the like) by a virtualization mechanism may possibly occur.

On the other hand, also a hosting service that provides a physical server as it is in order to avoid interference among users by the virtualization mechanism is available. However, in the hosting service, configuration change of a disk or the like cannot be easily performed and, in a physical server by which provision is started, resources are occupied until provision is stopped even if the physical server is not used, and the utilization efficiency of the resources decreases. Further, in the hosting service, all of services capable of being implemented in a normal physical server can be utilized by users, and, for example, it is difficult for the manager or the like to perfectly manage firmware and so forth of a physical server being lent.

In contrast, the physical IaaS described above by the information processing system 1 secures a degree of freedom of the configuration similar to that of the virtual IaaS. Further, interference among users can be avoided similarly to the hosting service. In this manner, in the information processing system 1, it is supposed that a user performs operation and stopping of a logical server in a frequency substantially equal to that in the virtual IaaS.

As described above, since it is supposed that, in the information processing system 1, the lending process of the physical server 2 to a user and the recovery process of the physical server 2 from the user are frequently performed, the processes described above by the physical server 2 and the management server 10 are specif ically effective in the information processing system 1.

### (1-6) First Modification

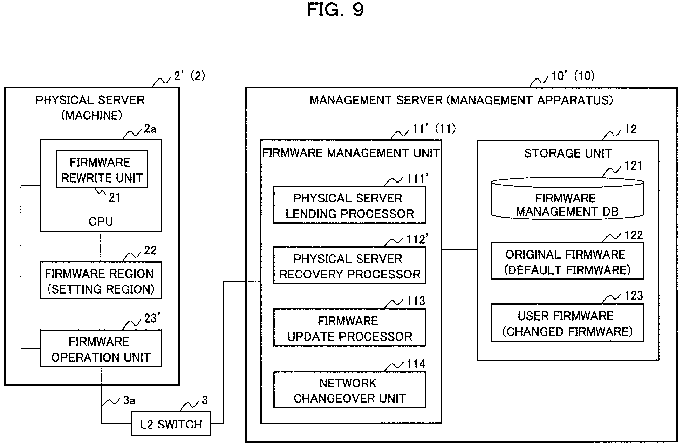

Now, the first modification to the first embodiment is described with reference to FIGS. 9 to 11.

FIG. 9 is a view depicting the first modification to the functional configuration of the physical server 2 and the management server 10 depicted in FIG. 1.

It is to be noted that, since like reference characters in FIG. 9 denote like or substantially like elements to those depicted in FIG. 3, overlapping description of them is omitted.

Further, functions not described specifically of a firmware operation unit 23', a physical server lending processor 111' and a physical server recovery processor 112' are similar to those of the corresponding elements depicted in FIG. 3.

In the first modification, the physical server 2' incorporates a function for performing an operationof the firmware region 22 in software that operates in the CPU 2a. Further, a firmware management unit 11' of a management server 10' can further include a network changeover unit 114 involved in change of the physical server 2'.

The firmware operation unit 23' implements a function similar to that of the firmware operation unit 23 by software executed by the CPU 2a and a rewriting function of the firmware region 22 the CPU 2a has.

If an operation instruction for firmware issued from the management server 10' is accepted, then the firmware operation unit 23' accesses the firmware region 22 using the firmware rewrite unit 21 the CPU 2a has (same as that used by the user).

It is to be noted that, different from the firmware operation unit 23, the firmware operation unit 23' receives an operation instruction through the communication line 3a from the management server 10'.

Here, as described above, the communication line 3a is a coupling line used for the provision of the physical server 2' to the user. The management server 10' according to the first modification uses the communication line 3a also as a line for management such as infrastructure management.

The network changeover unit 114 issues, upon operation instruction to the physical server 2' through the communication line 3a, an instruction for changeover of the virtual network to the L2 switch 3.

The management server 10 according to the first embodiment uses a route (management line 3b) capable of being accessed from the manager side (for example, from management server 10 side) such as an infrastructure manager. In contrast, the management server 10' according to the first modification accesses the physical server 2' using a route (communication line 3a) used also by the user. This gives rise to the possibility that, when the management server 10' accesses the physical server 2' through the communication line 3a, it may be visible from the tenant (user) side.

Therefore, the network changeover unit 114 causes, during access to the physical server 2', the L2 switch 3 to change over the network of the communication line 3a to the infrastructure side and causes, after the access to the physical server 2' comes to an end, the L2 switch 3 to change over the network to the tenant side.

For example, the L2 switch 3 prepares a virtual network of the physical server 2' using the communication line 3a one by one at the tenant side and the infrastructure side, and can perform changeover of the virtual network between the tenant side and the infrastructure side in accordance with a changeover instruction from the management server 10'. In this case, the network changeover unit 114 may include a VLAN ID in the changeover instruction such that the L2 switch 3 changes over the virtual network between the tenant side and the infrastructure side in accordance with the VLAN ID included in the changeover instruction.

After the network is changed over to the infrastructure side by the network changeover unit 114, the physical server recovery processor 112' reads out firmware from the physical server 2' through the network at the infrastructure side in order to decide whether or not the firmware has been changed.

After a deployment instruction of the firmware is issued to the physical server 2' , the physical server lending processor 111' causes the network changeover unit 114 to change over the network to the tenant side. It is to be noted that, since the network has been changed over already to the infrastructure side in the recovery process, the physical server lending processor 111' may omit to issue the changeover instruction to the network changeover unit 114 prior to the lending process.

It is to be noted that, where the network of the communication line 3a need not be changed over, the management server 10' may omit to provide the network changeover unit 114. In this case, the management server 10' can be configured similarly to the management server 10 of the first embodiment.

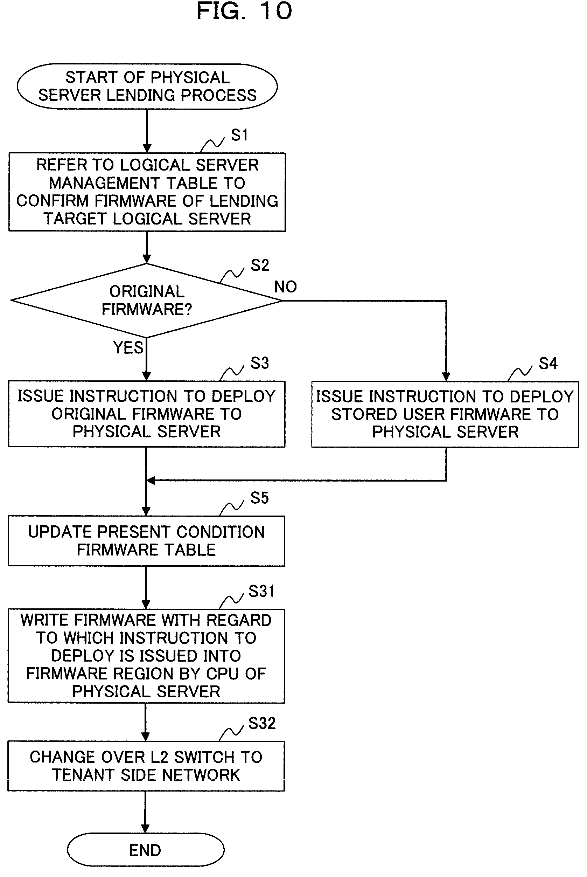

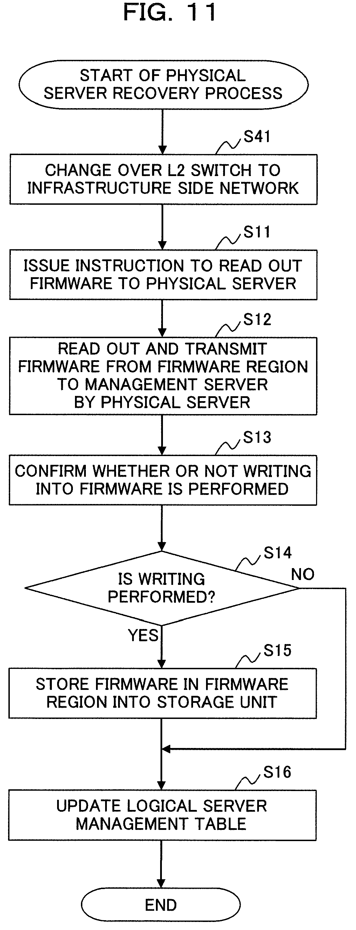

Now, an example of operation of the information processing system 1 as the first modification to the first embodiment configured in such a manner as described above is described with reference to FIGS. 10 and 11.

FIG. 10 is a flow chart illustrating an example of a lending process of the physical server 2' to the user by the physical server 2' and the management server 10' depicted in FIG. 9. FIG. 11 is a flow chart illustrating an example of a recovery process of the physical server 2' from the user by the physical server 2' and the management server 10' depicted in FIG. 9. It is to be noted that, since the update process of the original firmware 122 according to the first modification is basically similar to the process depicted in FIG. 8 according to the first embodiment, description of the update process is omitted.

It is to be noted that, since like reference characters in FIGS. 10 and 11 denote like or substantially like elements to those depicted in FIGS. 6 and 7, overlapping description of them is omitted.

First, processes at and after step S5 in the lending process of the physical server 2' to the user by the information processing system 1 are described with reference to FIG. 10.

At step S5, the present condition firmware table T2 is updated by the physical server lending processor 111'.

In the physical server 2' that receives a deployment instruction from the management server 10' through the management line 3a, the firmware of a target of the deployment instruction is written into the firmware region 22 of the own physical server 2' by the CPU 2a (firmware operation unit 23') (step S31). It is to be noted that the deployment instruction from the management server 10' is transmitted to the physical server 2' through the network at the infrastructure side.

Then, a changeover instruction to change over the network to the tenant side is issued to the L2 switch 3 by the network changeover unit 114 (step S32), and then the processing ends. It is to be noted that the L2 switch 3 that receives the changeover instruction changes over the virtual network of the physical server 2' of the lending target to the tenant side.

It is to be noted that the management server 10' may execute the process at step S32 after the process at step S5 (steps S3 to S5) is ended.

Now, a recovery process of the physical server 2' from the user by the information processing system 1 is described with reference to FIG. 11.

If the power supply to the logical server is turned off by the user, then a changeover instruction to change over the network to the infrastructure side is issued to the L2 switch 3 by the network changeover unit 114 (step S41), and the processing advances to step S11. It is to be noted that the L2 switch 3 that receives the changeover instruction changes over the virtual network of the physical server 2' of the lending target to the infrastructure side.

Description of the processes at steps S11 to S16 is omitted.

As described above, with the first modification to the first embodiment, an effect similar to that by the first embodiment can be achieved.

Further, with the firmware operation unit 23' according to the first modification, operation similar to that of the physical server 2 depicted in FIG. 3 can be caused to be performed by the physical server 2' on which a circuit like the firmware operation unit 23 depicted in FIG. 3 is not mounted. Accordingly, the manager or the like can use the physical server 2' that does not include the firmware operation unit 23 as a shared resource for the physical IaaS, and the cost required to introduce a new physical server 2 can be suppressed.

Further, with the network changeover unit 114 according to the first modification, access to the physical server 2' through the communication line 3a (operation of firmware) can be performed in safe.

Further, since the physical server 2' is not influenced by the tenant side when a process such as rewriting of firmware into the firmware region 22 is performed, a process such as rewriting of firmware can be performed with certainty.

### (1-7) Second Modification

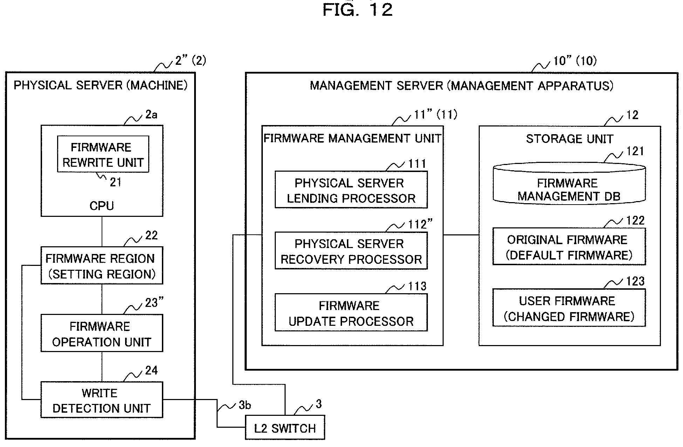

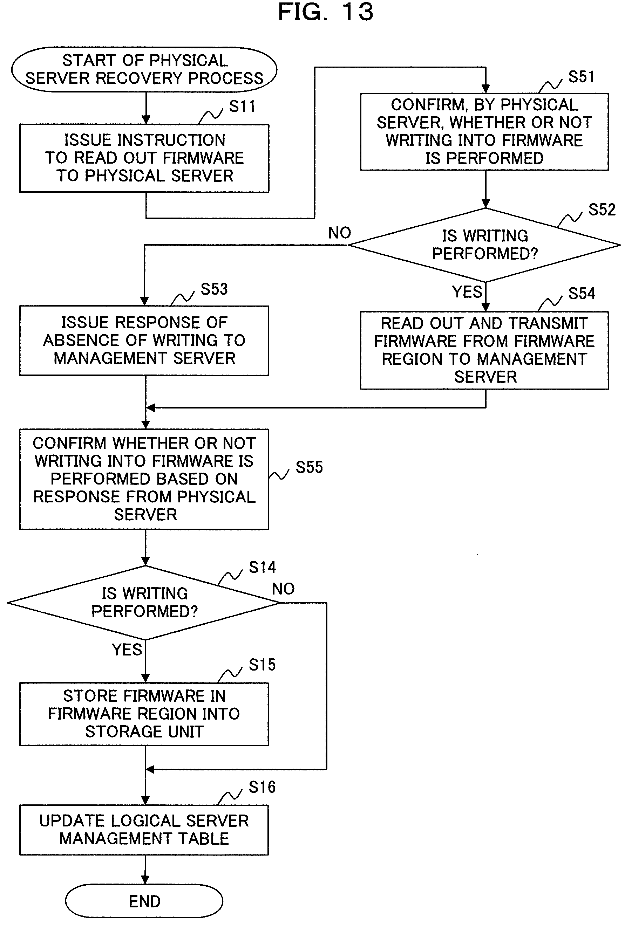

Now, the second modification to the first embodiment is described with reference to FIGS. 12 and 13.

FIG. 12 is a view depicting the second modification to the functional configuration of the physical server 2 and the management server 10 depicted in FIG. 1.

It is to be noted that, since like reference characters in FIG. 12 denote like or substantially like elements to those depicted in FIG. 3, overlapping description of them is omitted.

Further, functions not described specifically of a firmware operation unit 23" and a physical server recovery processor 112" are similar to those of the corresponding elements depicted in FIG. 3.

In the second modification, a physical server 2" further includes a write detection unit 24 that detects writing into the firmware region 22. Further, a firmware management unit 11" of a management server 10" includes a physical server recovery processor 112" different from the physical server recovery processor 112.

The write detection unit 24 is a circuit that detects that writing such as rewriting into the firmware region 22 has been performed within a period within which the physical server 2" is allocated to the logical server (during lending). For example, the write detection unit 24 includes a region such as a register and sets write-information indicating whether or not writing into the firmware region 22 has been performed after allocation to the region.

In particular, if the write detection unit 24 detects that writing by the CPU 2a into the firmware region 22 has been performed after allocation of the physical server 2", then its sets "1" or the like to the register.

If a readout instruction for the firmware is accepted from the physical server recovery processor 112" when the physical server 2" is recovered from the user, then the firmware operation unit 23" acquires write-information from the write detection unit 24. Then, if the write-information indicates occurrence of writing, then the firmware operation unit 23" reads out the firmware from the firmware region 22 and transmits the read out firmware to the management server 10". On the other hand, if the write-information does not indicate occurrence of writing, then the firmware operation unit 23" does not perform readout of the firmware but issues a response indicating that writing has not been performed to the management server 10".

It is to be noted that the firmware operation unit 23" is a circuit similar to the firmware operation unit 23 depicted in FIG. 3 and can access the firmware region 22 in accordance with the instruction from the management server 10" separately from the CPU 2a (firmware rewrite unit 21).

If the response of the readout instruction from the physical server 2" indicates that writing has not occurred, then the physical server recovery processor 112" ends the processing without performing decision regarding whether or not writing into the firmware of the physical server 2" has been performed after lending.

On the other hand, if the read out firmware is accepted from the physical server 2", then the physical server recovery processor 112" considers that writing into the firmware has been performed (the firmware has been changed by the user). Then, the physical server recovery processor 112" ends the processing without performing decision regarding whether or not writing into the accepted firmware has been performed after lending.

It is to be noted that, even if the write-information indicates occurrence of writing, since there is the possibility that, after change of the firmware, the user may return the changed firmware to the original state. Therefore, the contents of the firmware in the firmware region 22 have not sometimes been changed from the state before lending. Accordingly, also when the read out firmware is received from the physical server 2", the physical server recovery processor 112" may perform decision regarding whether or not writing into the accepted firmware has been performed similarly to the physical server recovery processor 112.

Now, an example of operation of the information processing system 1 as the second modification to the first embodiment configured in such a manner as described above is described with reference to FIG. 13.

FIG. 13 is a flow chart illustrating an example of a recovery process of the physical server 2" from the user by the physical server 2" and the management server 10" depicted in FIG. 12. It is to be noted that, since the lending process of the physical server 2" according to the second modification and the update process of the original firmware 122 according to the second modification are basically similar to the processes depicted in FIGS. 6 and 8 according to the first embodiment, description of the processes is omitted.

It is to be noted that, since like reference characters in FIG. 12 denote like or substantially like elements to those depicted in FIG. 7, overlapping description of them is omitted.

If the power supply to the logical server is turned off by the user, then a readout instruction of the firmware is issued to the physical server 2" corresponding to the logical server of a recovery target by the management server 10" (physical server recovery processor 112") (step S11).

In the physical server 2" that has received the readout instruction, write-information is read out from the write detection unit 24 by the firmware operation unit 23" and it is confirmed by the firmware operation unit 23" whether or not the write-information indicates occurrence of writing (step S51).

If, as a result of the confirmation (step S52), the write-information does not indicate occurrence of writing (No route at step S52), then a response indicating that writing has not been performed is transmitted to the management server 10" by the firmware operation unit 23" (step S53), and the processing advances to step S55.

On the other hand, if the write-information indicates occurrence of writing (Yes route at step S52), then the firmware is read out from the firmware region 22 of the own physical server 2" and is transmitted to the management server 10" by the firmware operation unit 23" (step S54), and the processing advances to step S55.

At step S55, it is confirmed in response to the response from the physical server 2" by the physical server recovery processor 112" whether or not writing into the firmware of the physical server 2" has been performed, and the processing advances to the decision process at step S14.

For example, if the response at step S53 is received, then the physical server recovery processor 112" decides that writing into the firmware of the firmware region 22 has not been performed.

Further, if the response (read out firmware) at step S54 is received, then the physical server recovery processor 112" performs decision regarding whether or not writing into the firmware has been performed similarly to the process at step S13 depicted in FIG. 7. Or, if the response at step S54 is received, then the physical server recovery processor 112" decides that writing into the firmware has been performed without performing the process at step S13 depicted in FIG. 7.

Description of the processes at steps S14 to S16 is omitted.

As described above, with the second modification to the first embodiment, an effect similar to that of the first embodiment can be achieved.

Further, with the physical server 2" according to the second modification, if a readout instruction for firmware is received, then the physical server 2" may transmit the firmware to the management server 10" when writing is detected by the write detection unit 24. Accordingly, the communication amount in the information processing system 1 can be reduced.

Further, with the management server 10" according to the second modification, if a response indicating that writing has not been performed is received from the physical server 2", then the physical server recovery processor 112" can omit the decision regarding whether or not the firmware has been changed after lending. Accordingly, the processing load to the management server 10" can be reduced. In addition, if read out firmware is received from the physical server 2", then the physical server recovery processor 112" may consider that writing has been performed and may omit the decision regarding whether or not the firmware has been changed after lending. Accordingly, the processing load to the management server 10" can be reduced further.

Further, with the physical server 2" and the management server 10" according to the second modification, the decision regarding whether or not the firmware has been changed after lending can sometimes be omitted, and the time period required for the recovery process of the physical server 2" from the user can be reduced from those of the first embodiment and the first modification. Accordingly, also the time period required until the physical server 2" is returned to the resource pool after the user has turned off the power supply to the logical server can be reduced and the utilization efficiency of the resources can be increased.

### (2) Second Embodiment

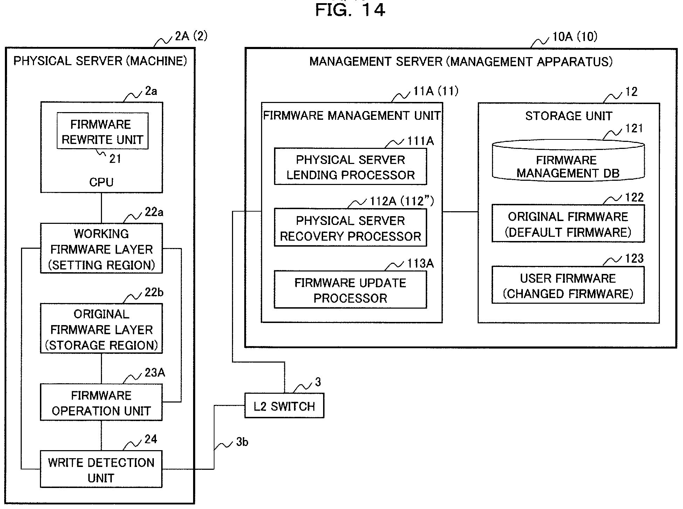

Now, an example of the second embodiment is described with reference to FIGS. 14 to 16.

FIG. 14 is a view depicting an example of a functional configuration of a physical server 2A and a management server 10A according to the second embodiment.

It is to be noted that, since like reference characters in FIG. 14 denote like or substantially like elements to those depicted in FIG. 3 or 12, overlapping description of them is omitted.

Further, unless otherwise specified, functions relating to a firmware operation unit 23A of the physical sever 2A are similar to those of the corresponding element depicted in FIG. 3 or 12.

Further, unless otherwise specified, functions of a firmware management unit 11A (physical server lending processor 111A, a physical server recovery processor 112A and a firmware update processor 113A) of the management server 10A are similar to those of the corresponding element depicted in FIG. 3 or 12.

It is to be noted that the physical server 2A and the management server 10A depicted in FIG. 14 are provided in the information processing system 1 according to the first embodiment depicted in FIG. 1. Further, the management server 10A depicted in FIG. 14 includes a hardware configuration similar to that of the management server 10 according to the first embodiment depicted in FIG. 2.

In the first embodiment (and the first and second modifications), the physical server 2 is described such that it includes one layer of the firmware region 22. In contrast, the physical server 2A according to the second embodiment includes two layers of firmware regions including a working firmware layer 22a and an original firmware layer 22b.

The working firmware layer (setting region) 22a is a region to be accessed upon execution or rewriting of firmware by the CPU 2a similarly to the firmware region 22 of the physical server 2. Further, regarding the working firmware layer 22a, detection by the write detection unit 24 regarding whether or not writing has been performed similar to the detection by the write detection unit 24 according to the second modification to the first embodiment is performed.

The original firmware layer (storage region) 22b is a region to which the original firm of an update version is set by the management server 10A.

The firmware operation unit 23A is a circuit that allows reading from and writing into the working firmware layer 22a and the original firmware layer 22b under the control of the management server 10A. The firmware operation unit 23A can access the layers separate from the CPU 2a (firmware rewrite unit 21).

Here, the firmware update processor 113A of the management server 10A transmits, when original firm of an update version is acquired, the acquired original firm to the physical server 2A in addition to the function of the firmware update processor 113 according to the first embodiment. In particular, the firmware update processor 113A transmits the original firm of the update version to each physical server 2A together with a writing instruction into the original firmware layer 22b of the physical server 2A.

If the writing instruction is received from the firmware update processor 113A, then the firmware operation unit 23A writes the original firm of the update version into the original firmware layer 22b.

In this manner, the original firm same as the original firmware 122 of the storage unit 12 of the management server 10A is set to the original firmware layer 22b.

The firmware operation unit 23A performs operation of (i) or (ii) given below in the lending process of the physical server 2A to the user:
(i) Where firmware corresponding to the user is the user firmware 123
   Similarly as in the first embodiment, the user firmware 123 received from the management server 10A is set to the working firmware layer 22a in accordance with the deployment instruction from the physical server lending processor 111A.
(ii) Where firmware corresponding to the user is the original firmware 122

The original firm set to the original firmware layer 22b is copied into and set to the working firmware layer 22a in accordance with the deployment instruction from the physical server lending processor 111A.

In this manner, where the firmware corresponding to the logical server of the lending target is the original firmware 122 (in the case of (ii)), the physical server lending processor 111A does not need to transmit the firmware in the deployment instruction to the physical server 2A.

It is to be noted that, in the recoveryprocess of the physical server 2A from the user, the physical server recovery processor 112A and the firmware operation unit 23A perform processes similar to those of the second modification to the first embodiment described above. In particular, the physical server recovery processor 112A has a function similar to that of the physical server recovery processor112". Further, relating to the recovery process, the firmware operation unit 23A has a function similar to that of the firmware operation unit 23 except that the region from which the firmware is read out is the working firmware layer 22a.

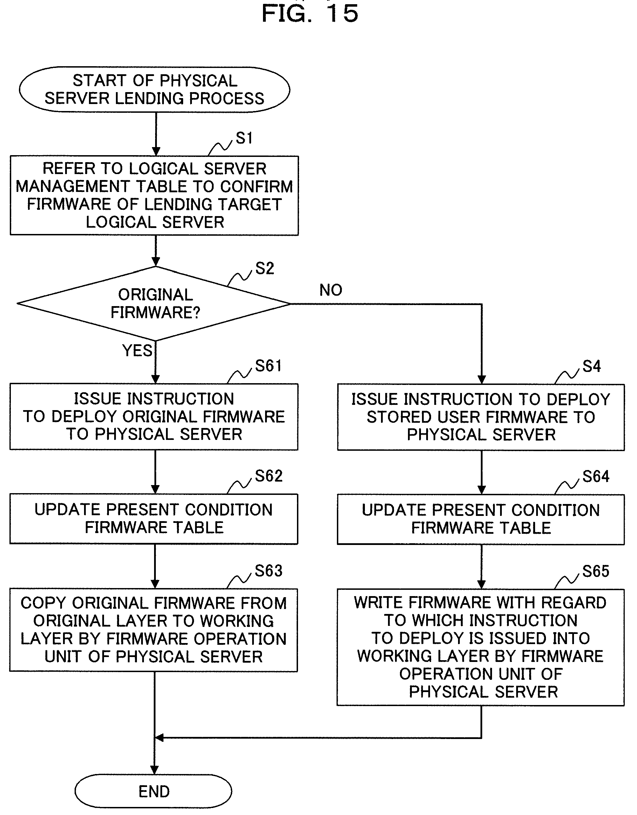

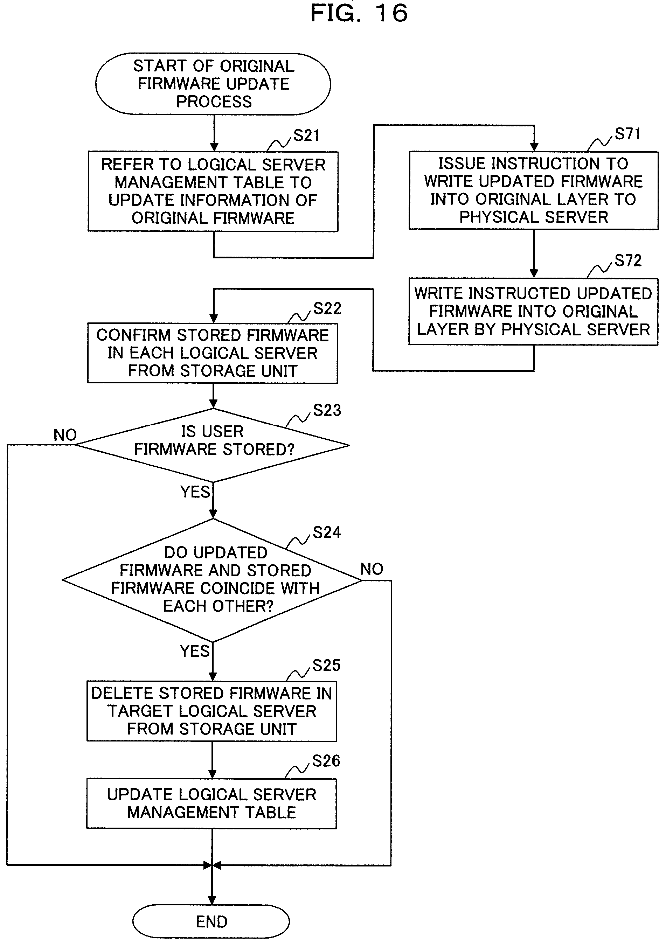

Now, an example of operation of the information processing system 1 as an example of the second embodiment configured in such a manner as described above is described with reference to FIGS. 15 and 16.

FIG. 15 is a f low chart illustrating an example of the lending process of the physical server 2A to the user by the physical server 2A and the management server 10A depicted in FIG. 14. FIG. 16 is a flow chart illustrating an example of an update process of the original firmware 122 by the management server 10A depicted in FIG. 14. It is to be noted that, since the recovery process of the physical server 2A according to the second embodiment is basically similar to the process depicted in FIG. 13 according to the second modification to the first embodiment, description of the process is omitted.

It is to be noted that, since like reference characters in FIGS. 15 and 16 denote like or substantially like elements to those depicted in FIGS. 6 and 8, overlapping description of them is omitted.

First, processes at and after step S2 relating to the lending process of the physical server 2A to the user by the information processing system 1 are described with reference to FIG. 15.

At step S2, it is decided by the physical server lending processor 111A whether or not the firmware of the logical server of the lending target is the original firmware 122. If the firmware of the logical server is the original firmware 122 (Yes route at step S2), then an instruction for deployment of the original firmware to the physical server 2A of the allocation target by the physical server lending processor 111A is issued (step S61) .

Further, by the physical server lending processor 111A, the firmware name in the entry of the physical server 2A of the allocation target in the present condition firmware table T2 is updated to the firmware name with regard to which the instruction for deployment has been issued at step S61 (step S62).

In the physical server 2A that receives the deployment instruction from the management server 10A, by the firmware operation unit 23A, the original firm is copied from the original firmware layer 22b of the own physical server 2A into the working firmware layer 22a (step S63), and the processing ends.

On the other hand, if the firmware of the logical server of the lending target is not the original firmware 122 (No route at step S2), then the user firmware 123 corresponding to the logical server of the lending target is read out from the storage unit 12 by the physical server lending processor 111A. Further, an instruction for deployment of the read out firmware to the physical server 2A of the allocation target is issued by the physical server lending processor 111A (step S4).

At step S64, by the physical server lending processor 111A, the firmware name in the entry of the physical server 2A of the allocation target in the present condition firmware table T2 is updated to the firmware name with regard to which the instruction for deployment has been issued at step S4.

In the physical server 2A that has received the deployment instruction from the management server 10A, by the firmware operation unit 23A, the firmware with regard to which the instruction for deployment has been issued is written into the working firmware layer 22a of the own physical server 2A (step S65), and the processing ends.

It is to be noted that the management server 10A may execute the processes at steps S62 and S64 in parallel to the processes the step S61 and S4, respectively.

Now, the update process of the original firmware 122 by the management server 10A is described with reference to FIG. 16.

If the management server 10A acquires the original firm of the update version, then, by the firmware update processor 113A, the logical server management table T1 is referred to and the firmware name is updated to the identification information "Oy" of all entries that indicate the original (step S21).

Further, by the firmware update processor 113A, a writing instruction of the original firm of the update version into the original firmware layer 22b is transmitted together with the original firm of the update version to the physical servers 2A in the information processing system 1 (step S71).

In the physical server 2A that receives the writing instruction from the management server 10A, by the firmware operation unit 23A, the original firm with regard to which the instruction for writing has been issued is written into the original firmware layer 22b (step S72), and the processing advances to step S22.

Description of the processes at steps S22 to S26 is omitted.

As described above, with the second embodiment, an effect similar to that of the first embodiment can be achieved.

Further, with the physical server 2A and the management server 10A according to the second embodiment, the original firmware 122 need not be transmitted from the management server 10A to the physical server 2A in the allocation process of the physical server 2A to the user. Accordingly, the communication amount in the information processing system 1 can be reduced. Further, the period of time required for the allocation process can be reduced from those in the first embodiment and the first and second modifications, and the period of time until the physical server 2A is provided to the user after the user turns on the power supply to the logical server can be reduced. Therefore, the utilization efficiency of the resources can be increased.

### (3) Others

While the preferred embodiments of the present invention are described in detail above, the present invention is not limited to the embodiment specifically described above, and variations and modifications can be made without departing from the scope of the present invention.

For example, the functions of the physical server 2 and management server 10, the physical server 2' and management server 10', the physical server 2" and management server 10" and the physical server 2A and management server 10A according to the first embodiment, first and second modifications and second embodiment described above may be combined arbitrarily.

It is to be noted that all or part of the various functions of the physical server 2' and the management server 10 to 10" and 10A according to the first embodiment, first and second modifications and second embodiment may be implemented by a computer (including a CPU, an information processing apparatus and various terminals) executing a predetermined program.

The program is provided in the form in which it is recorded on a computer-readable recording medium (for example, the recording medium 10h depicted in FIG. 2) such as, for example, a flexible disk, a CD, a DVD or a Blu-ray disk. It is to be noted that, as the CD, a CD-ROM, a CD-R, CD-RW and so forth are available. Further, as the DVD, a DVD-ROM, a DVD-RAM, a DVD-R, DVD-RW, a DVD+R, DVD+RW and so forth are available. In this case, the computer reads the program from the recording medium and uses the program by transferring and storing the program to and into an internal storage apparatus or an external storage apparatus.

Here, the computer is a concept including hardware and an OS and signifies hardware that operates under the control of the OS. Meanwhile, where no OS is required and hardware operates solely by an application program, the hardware itself corresponds to a computer. The hardware includes at least a microprocessor such as a CPU and means for reading the computer program recorded in the recording medium. The program described above includes program codes for causing such a computer as described above to implement the various functions of the physical server 2' and the management server 10 to 10" and 10A according to the first embodiment, first and second modifications and the second embodiment. Further, part of the functions may be implemented not by an application program but by an OS.

### DESCRIPTION OF REFERENCE CHARACTERS

1 information processing system (machine providing system)
2, 2', 2", 2A, 2-1 to 2-n physical server (machine)
2a, 10a CPU (processor)
2b, 10b memory
3 L2 switch
3a communication line
3b management line
4 disk unit
5 high-speed interconnect
6 controller
7 network
8 user terminal
10, 10', 10", 10A management server (management apparatus)
10c storage unit
10d interface unit
10e input and output unit
10f, 10h recording medium
10g reading unit
11, 11', 11", 11A firmware management unit
12 storage unit
20 physical server group
21 firmware rewrite unit
22 firmware region (setting region)
22a working firmware layer (setting region)
22b original firmware layer (storage region)
23, 23', 23", 23A firmware operation unit
24 write detection unit
40 disk unit group
111, 111', 111A physical server lending processor
112, 112', 112", 112A physical server recovery processor
113, 113A firmware update processor
114 network changeover unit
121 firmware management DB
122 original firmware (default firmware)
123 user firmware (changed firmware)

## Claims

1. A machine providing method for providing one or more machines to a user in a unit of the machine, the machine providing method comprising:
deciding, when a first machine allocated to a user is to be released from allocation to the user, whether or not firmware that controls operation of the first machine has been changed after the allocation;
storing, when the firmware has been changed, information relating to a changed firmware into a storage unit in an associated relationship with the user;
deciding, when the first machine or a second machine is allocated to the user, whether or not the information corresponding to the user is stored in the storage unit;
setting, in a case where the information corresponding to the user is stored in the storage unit, the changed firmware to the first or second machine to be allocated to the user; and
setting, in a case where the information corresponding to the user is not stored in the storage unit, default firmware to the first or second machine to be allocated to the user.

2. The machine providing method according to claim 1,
wherein, when contents of the default firmware are to be updated,
it is decided whether or not the changed firmware stored in the storage unit coincides with the default firmware after updated;
in a case where the changed firmware coincides with the default firmware after updated, information relating to the changed firmware is deleted from the storage unit; and
the default firmware after updated is managed in an associated relationship with the user with regard to whom the information is deleted.

3. The machine providing method according to claim 1,
wherein, when contents of the default firmware are to be updated, the default firmware after updated is managed in an associated relationship with the user associated with the default firmware, and
when the first or second machine is allocated to the user associated with the default firmware after updated, the default firmware after updated is set to the first or second machine to be allocated to the user.

4. The machine providing method according to claim 1 or 2,
wherein, when contents of the default firmware are to be updated,
the default firmware after updated is managed in an associated relationship with the user associated with the default firmware,
the default firmware after updated is set to a given storage region provided in each of the one or more machines, and
when the first or second machine is allocated to the user associated with the default firmware after updated, the default firmware after updated is copied from the given storage region of the first or second machine to be allocated to the user to a setting region of the firmware provided in the first or second machine.

5. The machine providing method according to any one of claims 1 to 4,
wherein, when the first machine is to be released from the allocation to the user, write-information indicating whether or not writing into a setting region of the firmware provided in the first machine has occurred after the allocation is acquired, and
decision of whether or not the firmware has been changed is performed based on whether or not the write-information indicates occurrence of writing after the allocation.

6. The machine providing method according to claim 5,
wherein the decision of whether or not the firmware has been changed is performed by deciding whether or not, where the write-information indicates occurrence of writing after the allocation, the firmware of the first machine and the firmware corresponding to the user or the default firmware stored in the storage unit coincide with each other.

7. The machine providing method according to any one of claims 1 to 6, further comprising:
by a management apparatus that manages the one or more machines and includes the storage unit
changing over a network between the first machine and the management apparatus from a network used for provision of the first machine to the user to a network for management, and
deciding whether or not the firmware has been changed after the allocation by acquiring the firmware from the first machine through the network for management.

8. The machine providing method according to claim 7, further comprising:
by the management apparatus
setting firmware corresponding to the user to the first or second machine to be allocated to the user through the network for management, and
changing over the network between the first or second machine and the management apparatus from the network for management to the network used for provision of the first or second machine to the user.

9. A machine providing system, comprising:
one or more machines; and
a management apparatus including a storage unit and configured to perform management for providing the one or more machines to a user in a unit of the machine,
wherein the management apparatus
decides, when a first machine allocated to a user is to be released from allocation to the user, whether or not firmware that controls operation of the first machine has been changed after the allocation,
stores, when the firmware has been changed, information relating to a changed firmware into the storage unit in an associated relationship with the user, and
decides, when the first machine or a second machine is allocated to the user, whether or not the information corresponding to the user is stored in the storage unit, and
wherein the first or second machine to be allocated to the user
sets, in a case where the information corresponding to the user is stored in the storage unit, the changed firmware to the own machine, and
sets, in a case where the information corresponding to the user is not stored in the storage unit, default firmware to the own machine.

10. The machine providing system according to claim 9,
wherein, when contents of the default firmware are to be updated,
the management apparatus
decides whether or not the changed firmware stored in the storage unit coincides with the default firmware after updated,
deletes, in a case where the changed firmware coincides with the default firmware after updated, information relating to the changed firmware from the storage unit, and
manages the default firmware after updated in an associated relationship with the user with regard to whom the information is deleted.

11. The machine providing system according to claim 9 or 10,
wherein, when contents of the default firmware are to be updated,
the management apparatus
manages the default firmware after updated in an associated relationship with the user associated with the default firmware, and
sets the default firmware after updated to a given storage region provided in each of the one or more machines, and
the first or second machine
copies, when the first or second machine is allocated to the user associated with the default firmware after updated, the default firmware after updated from the given storage region of the first or second machine to be allocated to the user to a setting region of the firmware provided in the first or second machine.

12. The machine providing system according to any one of claims 9 to 11,
wherein the first machine
acquires, when the management apparatus is to release the first machine from the allocation to the user, write-information indicating whether or not writing into a setting region of the firmware provided in the first machine has occurred after the allocation, and
reads out, in a case where the write-information indicates occurrence of writing after the allocation, the firmware from the setting region and transmits the firmware to the management apparatus, and
the management apparatus
performs decision of whether or not the firmware has been changed based on whether or not the firmware is received from the first machine.

13. The machine providing system according to any one of claims 9 to 12,
wherein the management apparatus
changes over a network between the first machine and the management apparatus from a network used for provision of the first machine to the user to a network for management, and
decides whether or not the firmware has been changed after the allocation by acquiring the firmware from the first machine through the network for management.

14. The machine providing system according to claim 13,
wherein the first or second machine
sets firmware corresponding to the user to the first or second machine to be allocated to the user in response to an instruction from the management apparatus through the network for management, and
the management apparatus
changes over, after the instruction is transmitted, a network between the first or second machine and the management apparatus from the network for management to the network used for provision of the first or second machine for the user.

15. A machine providing program for providing one or more machines to a user in a unit of the machine, the machine providing program causing a computer to execute:
deciding, when a first machine allocated to a user is to be released from allocation to the user, whether or not firmware that controls operation of the first machine has been changed after the allocation;
storing, when the firmware has been changed, information relating to a changed firmware into a storage unit in an associated relationship with the user;
deciding, when the first machine or a second machine is allocated to the user, whether or not the information corresponding to the user is stored in the storage unit;
setting, in a case where the information corresponding to the user is stored in the storage unit, the changed firmware to the first or second machine to be allocated to the user; and
setting, in a case where the information corresponding to the user is not stored in the storage unit, default firmware to the first or second machine to be allocated to the user.

16. The machine providing program according to claim 15,
wherein, when contents of the default firmware are to be updated,
the machine providing program causes the computer to execute:
deciding whether or not the changed firmware stored in the storage unit coincides with the default firmware after updated;
deleting, in a case where the changed firmware coincides with the default firmware after updated, information relating to the changed firmware from the storage unit; and
managing the default firmware after updated in an associated relationship with the user with regard to whom the information is deleted.

17. The machine providing program according to claim 15,
wherein, when contents of the default firmware are to be updated,
the machine providing program causes the computer to execute:
managing the default firmware after updated in an associated relationship with the user associated with the default firmware;
setting the default firmware after updated to a given storage region provided in each of the one or more machines; and
copying, when the first or second machine is allocated to the user associated with the default firmware after updated, the default firmware after updated from the given storage region of the first or second machine to be allocated to the user to a setting region of the firmware provided in the first or second machine.

18. The machine providing program according to any one of claims 15 to 17,
wherein the machine providing program causes the computer to execute:
acquiring, when the first machine is to be released from the allocation to the user, write-information indicating whether or not writing into a setting region of the firmware provided in the first machine has occurred after the allocation; and
decision of whether or not the firmware has been changed is performed based on whether or not the write-information indicates occurrence of writing after the allocation.

19. The machine providing program according to any one of claims 15 to 18,
wherein the machine providing program causes the computer to execute:
changing over a network between the first machine and the computer that manages the one or more machines and includes the storage unit, from a network used for provision of the first machine to the user to a network for management; and
deciding whether or not the firmware has been changed after the allocation by acquiring the firmware from the first machine through the network for management.

20. The machine providing program according to claim 19,
wherein the machine providing program causes the computer to execute:
setting firmware corresponding to the user to the first or second machine to be allocated to the user through the network for management; and
changing over the network between the first or second machine and the management apparatus from the network for management to the network used for provision of the first or second machine to the user.
